# EUROPEAN PATENT APPLICATION

(11) **EP 4 386 648 A1**
(43) Date of publication of application: **19.06.2024**
(21) Application number: 22855550.4
(22) Date of filing: 13.08.2022
(51) Int. Cl.: G06Q 30/00, G06F 21/64, G06Q 20/40

(54) **BLOCKCHAIN-BASED SOURCE-TRACING METHOD AND SYSTEM**

(30) Priority: 13.08.2021 HK 32021036957
(71) Applicant: Sum Intellectual Property Limited, Hong Kong (HK)
(72) Inventor: LEE, Chun Kit, Hong Kong (CN); CHAN, Ka Wo, Hong Kong (CN)
(74) Representative: Klunker IP Patentanwälte PartG mbB
(86) International application number: PCT/CN2022/112337
(87) International publication number: WO 2023/016570

(57) **Abstract**

Disclosed is a blockchain-based provenance tracing method and system. The blockchain-based provenance tracing system may comprise a service platform, the service platform referring to a decentralized peer-to-peer network built based on blockchain technology; the service platform is configurable to assign a digital assets token to a commodity and distribute the digital assets token to a brand node, and query block data associated with the digital assets token of the commodity as per a transaction application with respect to the commodity so as to trace provenance of the commodity and return a commodity provenance result to a transaction participant node; and configured to record the commodity's transaction data as block data. The embodiments of the disclosure enable the brand and the transaction participants to identify authenticity of a commodity efficiently, rapidly, and accurately.

## Description

### FIELD

Embodiments of the present disclosure relate to transaction security, and more particularly relate to a blockchain-based provenance tracing method and a corresponding system.

### BACKGROUND

Authenticity is crucial to transactions of luxuries, secondhand goods, and collections. Conventionally, if it is needed to identify authenticity of such commodities in a transaction, they are always sent to an authority, an auditing body or a brand-designated authentication agency for being authenticated, which is time-consuming, laborious, and costly. Tracing provenance of a commodity refers to a process of recording each and every event in the commodity's journey including its creation and circulation. Reliable provenance tracing leads to a more efficient authentication of a commodity in transaction.

### SUMMARY

To solve or at least solve the technical problems above, the present disclosure provides a blockchain-based provenance tracing method and a blockchain-based provenance tracing system.

In a first aspect of the present disclosure, there is provided a blockchain-based provenance tracing method, comprising steps of:
assigning, by a service platform before first transaction, a digital assets token to a commodity as per a commodity tracking request from a brand node, and distributing the digital assets token to the brand node, such that the brand node writes the digital assets token into the commodity's chip;
querying, by the service platform before each transaction, block data associated with the digital assets token of the commodity as per a transaction application from a transaction participant node with respect to the commodity so as to trace provenance of the commodity, and returning a commodity provenance result to the transaction participant node, such that the transaction participant node prompts a corresponding transaction participant to transact after identifying authenticity of the commodity based on the commodity provenance result;
recording, by the service platform after each transaction, the commodity's transaction data from the transaction participant node as the block data, the block data being configured to trace a circulation process of the commodity;
wherein the service platform refers to a decentralized peer-to-peer network built based on blockchain technology.

In a second aspect of the present disclosure, there is provided blockchain-based provenance tracing system, characterized by comprising: a service platform, the service platform referring to a decentralized peer-to-peer network built based on blockchain technology; wherein: the service platform is configured to assign a digital assets token to a commodity as per a commodity tracking application from a brand node, and distribute the digital assets token to the brand node, such that the brand node writes the digital assets token into the commodity's chip; and configured to query block data associated with the digital assets token of the commodity as per a transaction application from a transaction participant node with respect to the commodity, and return a commodity provenance result to the transaction participant node, such that the transaction participant node prompts a corresponding transaction participant to transact after identifying authenticity of the commodity based on the commodity provenance result; and configured to record the commodity's transaction data from the transaction participant node as block data, the block data being configured to trace a circulation process of the commodity.

Embodiments of the present disclosure enable automatic creation of block data including the transaction data of a commodity during the commodity's transaction process via the service platform built based on blockchain technology; since the block data are immutable and permanent, circulation of the commodity may be traced via the commodity's block data; therefore, the brand and the transaction participant may efficiently, quickly, and accurately identify authenticity of the commodity by querying the commodity's transaction data from the service platform.

### BRIEF DESCRIPTION OF THE DRAWINGS

To illustrate the embodiments of the present disclosure more clearly, related drawings will be briefly described below. It is understood that the drawings depicted below are only intended for illustrating some embodiments of the present disclosure, and those of normal skill in the art may derive other technical features and connection relationships not described here from these figures.
Fig 1 is an architecture diagram of a blockchain-based provenance tracing system according to an embodiment of the present disclosure;
Fig. 2 is a flow diagram of a blockchain-based provenance tracing method according to an embodiment of the present disclosure.

### DETAILED DESCRIPTION

Hereinafter, the present disclosure will be described in detail with reference to the accompanying drawings.

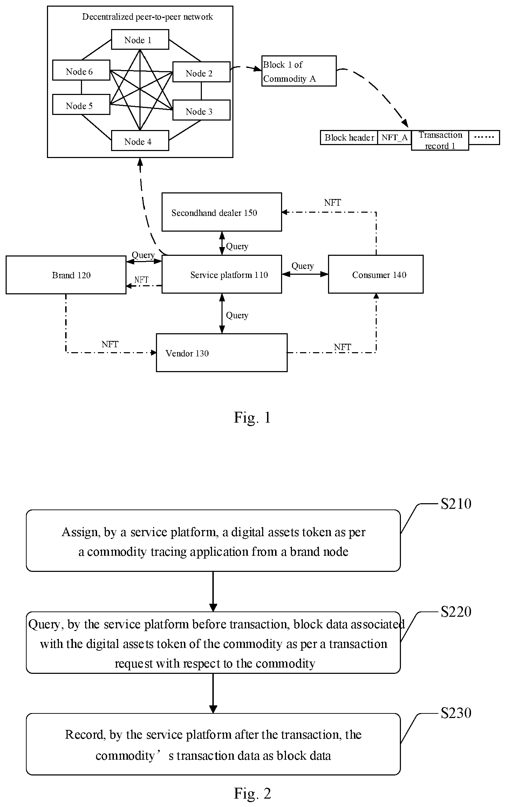

Fig. 1 shows a structural schematic diagram of a blockchain-based provenance tracing system 100 according to an embodiment of the present disclosure. As illustrated in Fig. 1, the blockchain-based provenance tracing system may comprise: a service platform 110 and client nodes.

As illustrated in Fig. 1, client nodes may refer to any node in a commodity circulation process. Specifically, the client nodes may include, but are not limited to, a brand node 120, a retailer node 130, a consumer node 140, a secondhand dealer node 150, in which the retailer node 130, the consumer node 140, and the secondhand dealer node 150 all belong to a transaction participant node; the brand node 120 may also be referred to as a supplier node, a manufacturer node, or otherwise.

In actual applications, each client node may be implemented via a computing device or a cluster of computing devices; each client node may be installed with client software that may be configured to implement the method below and various functions of the provenance tracing system 100 depicted in the embodiments of the present application. For example, the brand node 120, the retailer node 130, and the secondhand dealer node 150 may be implemented via a desktop computer, a portable computing device, a mobile device or the like. The consumer node 140 may be implemented by a portable computing device, a tablet computer, a mobile phone, a portable electronic device or the like.

As illustrated in Fig. 1, the service platform 110 may be implemented by a peer-to-peer network built based on blockchain technology. Specifically, the service platform 110 may be a decentralized peer-to-peer network which may include a plurality of nodes (e.g., node 1 to node 6), each node being interconnected with other nodes via a communication protocol such as TCP/IP, each node being stored with block data of a commodity such that failure of one node does not affect communication between remaining nodes. Although the service platform 110 is implemented as a decentralized peer-to-peer network including node 1- node 6, as illustrated in Fig. 1, those skilled in the art may understand that the decentralized peer-to-peer network is only an example herein. In actual applications, the network architecture and the number of nodes comprised in the service platform 110 are not limited. In addition, a new node may be added to the service platform 110 when needed, and existing nodes may be automatically connected to the new node. Since the service platform 110 is a decentralized peer-to-peer network built based on blockchain, the block data of the commodity in each node being immutable and permanent. In case of any tampering, relevant block data may be destroyed instantaneously or the corresponding block data may be labelled as invalid, whereby reliability and traceability of the commodity's transaction records may be ensured.

With commodity A as an example, it may be labeled in the service platform 110 with its digital assets token (e.g., NFT_A). In the course of transaction and circulation, the digital assets token (e.g., EFT_A) is also transferred between corresponding nodes. For example, after the brand sells commodity A to a retailer, its digital assets token NFT_A will be transferred from brand node 120 to the retailer node 130; meanwhile, a corresponding node in the service platform 110 records the data of this transaction of commodity A as a block to store, which block may include information such as block header, NFT_A, and transaction records. It is seen that the circulation process of commodity A is recorded by the service platform 110 as block data of NFT_A, the block data of NFT_A allowing for tracing provenance of commodity A. Specifically, the brand node 120, the retailer node 130, the consumer node 140, and the secondhand dealer node 150 may all query the service platform 110 for the transaction records in the block data of NFT_A, which provides for provenance traceability to commodity A, whereby authenticity of commodity A may be identified efficiently, quickly, and accurately.

Embodiments of the present disclosure may be adapted to various kinds of commodities. In some embodiments, the present application is particularly suitable for commodities such as luxuries, secondhand commodities, and collectables whose values are high or hard to determine accurately.

In some embodiments of the present application, the digital assets token may act as a unique provenance identifier of a commodity, which may be regarded as virtual assets of the commodity. The digital assets token may uniquely represent a commodity. In actuality, the digital assets token may be any digital assets token supporting the blockchain technology. For example, the digital assets token may refer to, but is not limited to, a non-fungible token (NFT). The NFT includes the identification information recorded in a smart contract, and this identification information makes each NFT distinguishable; therefore, the NFT cannot be directly replaced by another token. The NFTs cannot be exchanged like other kinds of currencies, because each NFT is unique and inseverable; the NFT and its smart contract also allow adding attribute details, e.g., the owner's identity, detailed metadata, or security file link, etc.

Hereinafter, specific implementation manners of the embodiments of the present disclosure will be explained in detail.

The service platform 110 is configured to assign a digital assets token as per a commodity tracking application from the brand node 120 and distribute the digital assets token to the brand node 120 such that the brand node 120 writes the digital assets token into the commodity's chip, and configured to query block data associated with the digital assets token of the commodity as per a transaction application from the transaction participant node with respect to the commodity so as to trace provenance of the commodity and return a commodity provenance result to the transaction participant node, such that the transaction participant node prompts a corresponding transaction participant to transact after identifying authenticity of the commodity based on the commodity provenance result; and configured to record the transaction data of the commodity from the transaction participant node as the block data, the block data being configured to trace a circulation process of the commodity.

The brand node 120 may be configured to issue a commodity tracking application to the service platform 110. In some embodiments, the commodity tracking application may carry attribute data of the commodity, the attribute data including one or more of: commodity number, commodity name, brand name, place of manufacture, and time of manufacture.

The transaction participant node (e.g., retailer node 130, consumer node 140, or secondhand dealer node 150) is configured to issue a transaction application to the service platform 110, the transaction application carrying the digital assets token in the commodity's chip, receive the commodity provenance result from the service platform 110 and prompt the corresponding transaction participant to transact after identifying authenticity of the commodity based on the commodity provenance result; and configured to provide a transaction completed message to the service platform 110, the transaction completed message carrying the digital assets token and the commodity's transaction data. In some embodiments, the transaction data may include one or more of: place of transaction, parties to the transaction, time of the transaction, price of the transaction, and taxes related to the transaction.

In some embodiments, the brand node 120 may be further configured to transmit a circulation query application with respect to the commodity to the service platform 110, the circulation query application carrying the digital assets token of the commodity, and receive the commodity's transaction data returned from the service platform. The service platform 110 may be further configured to query one or more block data associated with the digital assets token as per the circulation query application with respect to the commodity, and return the transaction data corresponding to the one or more block data to the brand node 120.

Fig. 2 shows a flow schematic diagram of a blockchain-based provenance tracing method provided according to some embodiments of the present disclosure. As illustrated in Fig. 2, the blockchain-based provenance tracing method provided according to some embodiments of the present disclosure may comprise the following steps:
Step S210: assigning, by a service platform before first transaction, a digital assets token to a commodity as per a commodity tracking application from a brand node, and distributing the digital assets token to the brand node, such that the brand node writes the digital assets token into the commodity's chip.

In some embodiments, the commodity tracking application carries attribute data of the commodity, the attribute data including one of: commodity number, commodity name, brand name, place of manufacture, and time of manufacture. This may facilitate recording of the attributes of the commodity into block data of the commodity, facilitate tracking production of the commodity via the block data, and further facilitate identifying authenticity of the commodity accurately and efficiently in a transaction such as secondhand transaction, auction, collection or pre-purchase so as to certify the commodity.

Step S220: querying, by the service platform before each transaction, the block data associated with the digital assets token of the commodity as per a transaction application from a transaction participant node with respect to the commodity so as to trace provenance of the commodity, and return a commodity provenance result to the transaction participant node.

Specifically, the transaction participant node issues a transaction application to the service platform before each transaction, the transaction application carrying the digital assets token in the commodity's chip, and the service platform queries the block data associated with the digital assets token of the commodity as per the transaction application from the transaction participant node with respect to the commodity so as to trace provenance of the commodity, and returns a commodity provenance result to the transaction participant node such that the transaction participant node prompts the corresponding transaction participant to transact after identifying authenticity of the commodity based on the commodity provenance result.

Step S230, recording, by the service platform after each transaction, the transaction data of the commodity from the transaction participant node, the block data being configured to trace a circulation process of the commodity.

Specifically, the transaction participant node provides a transaction completed message to the service platform after each transaction, the transaction completed message carrying the digital assets token and the commodity's transaction data, and the service platform records the commodity's transaction data as block data, associates the block data with the digital assets token and then store the block data, one or more block data associated with the digital assets token being configured to trace the circulation process of the commodity.

In some embodiments, the transaction data include one or more of: location of the transaction, seller, buyer, time of the transaction, price of the transaction, and taxes related to the transaction. In this way, authenticity of the commodity may be identified accurately and efficiently by tracing provenance of the commodity via the transaction data, whereby.

In some embodiments, the method may further comprise: querying, by the service platform, the one or more block data associated with the digital assets token as per a circulation query application from the brand node, and returning the transaction data corresponding to the one or more block data to the brand node. Specifically, the brand node transmits a circulation query application with respect to the commodity to the service platform, the circulation query application carrying the digital assets token of the commodity; the service platform queries the one or more block data associated with the digital assets token and returns the transaction data corresponding to the one or more block data to the brand node. This facilitates the brand to trace circulation of each commodity.

If the commodity's chip is loaded or unloaded during circulation, relevant information such as NFT in the chip is automatically modified; upon the next transaction, the transaction request received by the service platform with respect to the commodity will carry information related to the modified NFT; then, based on the NFT or related information, the service platform may determine the commodity as faked; this condition will be indicated to the transaction participant node in the authentication result; as such, the transaction participant node may block the transaction and alarm the user promptly.

The system and method described in the embodiments above enable automatic creation of block data including the transaction data of a commodity during the commodity's transaction process via interaction among the service platform built based on blockchain technology, the brand node, and the transaction participant node; since the block data are immutable and permanent, circulation of the commodity may be traced via the commodity's block data; therefore, the brand and the transaction participants may efficiently, quickly, and accurately identify authenticity of the commodity by querying the service platform for the commodity's transaction data.

Finally, it is noted that those skilled in the art may appreciate that although many technical details are described in the embodiments of the present application in order for readers to better understand the present application, the technical solutions sought for protection in various claims of the present application may be substantially implemented even without such technical details or based on various alterations and modifications of the embodiments above. Therefore, the embodiments may be varied in forms and details without departing from the spirits and scope of the present disclosure in practical applications.

## Claims

1. A blockchain-based provenance tracing method, **characterized by** comprising:
assigning, by a service platform before first transaction, a digital assets token to a commodity as per a commodity tracking request from a brand node, and distributing the digital assets token to the brand node, such that the brand node writes the digital assets token into the commodity's chip;
querying, by the service platform before each transaction, block data associated with the digital assets token of the commodity as per a transaction application from a transaction participant node with respect to the commodity so as to trace provenance of the commodity, and returning a commodity provenance result to the transaction participant node, such that the transaction participant node prompts a corresponding transaction participant to transact after identifying authenticity of the commodity based on the commodity provenance result;
recording, by the service platform after each transaction, the commodity's transaction data from the transaction participant node as the block data, the block data being configured to trace a circulation process of the commodity;
wherein the service platform refers to a decentralized peer-to-peer network built based on blockchain technology.

2. The blockchain-based provenance tracing method according to claim 1, **characterized in that** the digital assets token refers to a non-fungible token NFT.

3. The blockchain-based provenance tracing method according to claim 1, **characterized in that** the commodity refers to a luxury, a secondhand commodity, or a collection.

4. The blockchain-based provenance tracing method according to claim 1, **characterized by** further comprising: querying, by the service platform, one or more of the block data associated with the digital assets token as per a circulation query application from the brand node, and returning the transaction data corresponding to the one or more block data to the brand node.

5. The blockchain-based provenance tracing method according to claim 1, **characterized in that** the transaction data include one or more of: location of the transaction, seller, buyer, time of the transaction, price of the transaction, and taxes related to the transaction; and/or, the commodity tracking application carries attribute data of the commodity, the attribute data including one of: commodity number, commodity name, brand name, place of manufacture, and time of manufacture.

6. A blockchain-based provenance tracing system, **characterized by** comprising: a service platform, the service platform referring to a decentralized peer-to-peer network built based on blockchain technology; wherein:
the service platform is configured to assign a digital assets token to a commodity as per a commodity tracking application from a brand node, and distribute the digital assets token to the brand node, such that the brand node writes the digital assets token into the commodity's chip; and configured to query block data associated with the digital assets token of the commodity as per a transaction application from a transaction participant node with respect to the commodity, and return a commodity provenance result to the transaction participant node, such that the transaction participant node prompts a corresponding transaction participant to transact after identifying authenticity of the commodity based on the commodity provenance result; and configured to record the commodity's transaction data from the transaction participant node as block data, the block data being configured to trace a circulation process of the commodity.

7. The blockchain-based provenance tracing system according to claim 6, **characterized in that** the digital assets token refers to a non-fungible token NFT.

8. The blockchain-based provenance tracing system according to claim 6, **characterized in that** the commodity refers to a luxury, a secondhand commodity, or a collection.

9. The blockchain-based provenance tracing system according to claim 6, **characterized in that** the service platform is further configured to query one or more of the block data associated with the digital assets token as per a circulation query application from the brand node with respect to the commodity, and returns the transaction data corresponding to the one or more block data to the brand node.

10. The blockchain-based provenance tracing system according to claim 6, **characterized in that** the transaction data include one or more of: location of the transaction, seller, buyer, time of the transaction, price of the transaction, and taxes related to the transaction; and/or, the commodity tracking application carries attribute data of the commodity, the attribute data including one of: commodity number, commodity name, brand name, place of manufacture, and time of manufacture.
